(19) **Europäisches Patentamt / European Patent Office / Office européen des brevets**

(11) **EP 4 161 111 A1**

(12) # EUROPEAN PATENT APPLICATION
published in accordance with Art. 153(4) EPC

(43) Date of publication:
**05.04.2023 Bulletin 2023/14**

(21) Application number: **21859952.0**

(22) Date of filing: **14.07.2021**

(51) International Patent Classification (IPC):
***H04W 4/80*** (2018.01)  ***H04W 52/02*** (2009.01)

(52) Cooperative Patent Classification (CPC):
Y02D 30/70

(86) International application number:
**PCT/CN2021/106272**

(87) International publication number:
**WO 2022/042112 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2020 CN 202010901555**

(71) Applicant: **GUANGDONG OPPO MOBILE TELECOMMUNICATIONS CORP., LTD.**
**Dongguan, Guangdong 523860 (CN)**

(72) Inventor: **ZHANG, Xiusheng**
**Dongguan, Guangdong 523860 (CN)**

(74) Representative: **Taor, Simon Edward William et al**
**Venner Shipley LLP**
**200 Aldersgate**
**London EC1A 4HD (GB)**

(54) **SEARCHING AND POSITIONING METHOD AND APPARATUS, ELECTRONIC DEVICE, AND STORAGE MEDIUM**

(57) A searching and positioning method and apparatus, an electronic device, and a storage medium are provided. An electronic device establishes a Bluetooth communication connection with a tag device. The electronic device sends a first Bluetooth command to the tag device, where the first Bluetooth command instructs the tag device to enable a first ultra wide band (UWB) module and transmit a UWB signal with the first UWB module. The electronic device scans the UWB signal transmitted by the first UWB module, and determines relative location information of the electronic device relative to the tag device according to the UWB signal scanned. As such, the tag device can control a turn-on time of the first UWB module according to the first Bluetooth command, and the tag device will not enable the first UWB module if no first Bluetooth command is received. The electronic device scans the UWB signal transmitted by the tag device, and the tag device is responsible only for UWB-signal transmission without performing positioning and calculation, thereby reducing power consumption of the tag device. In addition, through precise positioning with UWB technology, the tag device can be found by a user quickly and accurately.

FIG. 1C

## Description

TECHNICAL FIELD

This disclosure relates to the field of electronic technology, and specifically to a searching and positioning method and apparatus, an electronic device, and a storage medium.

BACKGROUND

With wide popularity and application of electronic devices such as smartphones, tablet computers, etc., the electronic device can support an increasing number of applications and is increasingly more powerful in function. The electronic device is developing towards diversification and personalization and has become an indispensable electronic product in users' life.

In daily life, it often happens that an item needed by a user cannot be found at the moment, especially small items such as keys, earphones, remote controls, etc. Such item is put aside by the user when not in use. When the item is needed again, the user cannot remember where it has been placed, and it takes a long time to search for the item. Therefore, how to help the user to search for and determine a location of such small item is a problem to be solved.

SUMMARY

Implementations of the disclosure provide a searching and positioning method and apparatus, an electronic device, and a storage medium, which can help a user to find a tag device quickly and accurately with aid of ultra wide band (UWB) technology.

In a first aspect, a searching and positioning method is provided in implementations of the disclosure. The method is applicable to an electronic device. The method includes the following. Establish a Bluetooth communication connection with a tag device, where the tag device includes a first UWB module. Send a first Bluetooth command to the tag device, where the first Bluetooth command instructs the tag device to enable the first UWB module and transmit a UWB signal with the first UWB module. Scan the UWB signal transmitted by the first UWB module, and determine relative location information of the electronic device relative to the tag device according to the UWB signal scanned.

In a second aspect, a searching and positioning method is provided in implementations of the disclosure. The method is applicable to a tag device. The tag device includes a first UWB module. The method includes the following. Establish a Bluetooth communication connection with an electronic device. Receive a first Bluetooth command sent by the electronic device. Enable the first UWB module according to the first Bluetooth command. Transmit a UWB signal with the first UWB module, where the UWB signal is scanned by the electronic device, and relative location information of the electronic device relative to the tag device is determined according to the UWB signal scanned.

In a third aspect, a searching and positioning apparatus is provided in implementations of the disclosure. The apparatus includes a first connecting unit, a sending unit, a scanning unit, and a determining unit. The first connecting unit is configured to establish a Bluetooth communication connection with a tag device, where the tag device includes a first UWB module. The sending unit is configured to send a first Bluetooth command to the tag device, where the first Bluetooth command instructs the tag device to enable the first UWB module and transmit a UWB signal with the first UWB module. The scanning unit is configured to scan the UWB signal transmitted by the first UWB module. The determining unit is configured to determine relative location information of an electronic device relative to the tag device according to the UWB signal scanned.

In a fourth aspect, a searching and positioning apparatus is provided in implementations of the disclosure. The apparatus is applicable to a tag device. The tag device includes a first UWB module. The apparatus includes a second connecting unit, a receiving unit, a control unit, and a transmitting unit. The second connecting unit is configured to establish a Bluetooth wireless connection with an electronic device. The receiving unit is configured to receive a first Bluetooth command sent by the electronic device. The control unit is configured to enable the first UWB module according to the first Bluetooth command. The transmitting unit is configured to transmit a UWB signal with the first UWB module, where the UWB signal is scanned by the electronic device, and relative location information of the electronic device relative to the tag device is determined according to the UWB signal scanned.

In a fifth aspect, an electronic device is provided in implementations of the disclosure. The electronic device includes a processor, a memory, a communication interface, and one or more programs stored in the memory and configured to be executed by the processor. The programs include instructions for performing operations in the first aspect of implementations of the disclosure.

In a sixth aspect, a tag device is provided in implementations of the disclosure. The tag device includes a first UWB module, a microcontroller unit (MCU) chip, a memory, a communication interface, and one or more programs stored in the memory and configured to be executed by the MCU chip. The programs include instructions for performing operations in the second aspect of implementations of the disclosure.

In a seventh aspect, a searching and positioning system is provided in implementations of the disclosure. The system includes an electronic device and a tag device, where the tag device includes a first UWB module, and the electronic device includes a second UWB module. The electronic device is configured to establish a Bluetooth communication connection with the tag device and send a first Bluetooth command to the tag device. The tag device is configured to enable the first UWB module according to the first Bluetooth command and transmit a UWB signal with the first UWB module. The electronic device is further configured to scan the UWB signal transmitted by the first UWB module, and determine relative location information of the electronic device relative to the tag device according to the UWB signal scanned.

In an eighth aspect, a computer-readable storage medium is provided in implementations of the disclosure. The computer-readable storage medium is configured to store computer programs for electronic data interchange (EDI) which are operable with a computer to perform some or all operations described in the first aspect or in the second aspect of implementations of the disclosure.

In a ninth aspect, a computer program product is provided in implementations of the disclosure. The computer program product includes a non-transitory computer-readable storage medium that stores computer programs. The computer programs are operable with a computer to perform some or all operations described in the first aspect or in the second aspect of implementations of the disclosure. The computer program product may be a software installation package.

By implementing the implementations of the disclosure, the following advantages can be realized.

As can be seen, in the searching and positioning method and apparatus, the electronic device, and the storage medium provided in implementations of the disclosure, the electronic device establishes the Bluetooth communication connection with the tag device, where the tag device includes the first UWB module. The electronic device sends the first Bluetooth command to the tag device, where the first Bluetooth command instructs the tag device to enable the first UWB module and transmit a UWB signal with the first UWB module. The electronic device scans the UWB signal transmitted by the first UWB module, and determines the relative location information of the electronic device relative to the tag device according to the UWB signal scanned. As such, the tag device can control a turn-on time of the first UWB module according to the first Bluetooth command, and the tag device will not enable the first UWB module if no first Bluetooth command is received. The electronic device scans the UWB signal transmitted by the tag device, and the tag device is responsible only for UWB-signal transmission without performing positioning and calculation, thereby reducing power consumption of the tag device. In addition, through precise positioning with UWB technology, the tag device can be found by the user quickly and accurately.

BRIEF DESCRIPTION OF THE DRAWINGS

In order to describe technical solutions of implementations of the disclosure or the related art more clearly, the following will give a brief introduction to the accompanying drawings used for describing the implementations or the related art. Apparently, the accompanying drawings described below are merely some implementations of the disclosure. Based on these accompanying drawings, those of ordinary skill in the art can also obtain other accompanying drawings without creative effort.

FIG. 1A is a schematic structural diagram of an electronic device provided in implementations of the disclosure.

FIG. 1B is a schematic structural diagram of a tag device provided in implementations of the disclosure.

FIG. 1C is a schematic flowchart of a searching and positioning method provided in implementations of the disclosure.

FIG. 1D is a schematic diagram illustrating arrangement of a first antenna and a second antenna in an electronic device provided in implementations of the disclosure.

FIG. 1E is a schematic diagram illustrating determination of relative location information of an electronic device relative to a tag device according to a scanned ultra wide band (UWB) signal provided in implementations of the disclosure.

FIG. 1F is another schematic diagram illustrating determination of relative location information of an electronic device relative to a tag device according to a scanned UWB signal provided in implementations of the disclosure.

FIG. 1G is a schematic diagram illustrating display of an offset angle and a first distance onto a display screen provided in implementations of the disclosure.

FIG. 2 is a schematic flowchart of another searching and positioning method provided in implementations of the disclosure.

FIG. 3 is a schematic architectural diagram of a searching and positioning system provided in implementations of the disclosure.

FIG. 4 is a schematic structural diagram of an electronic device provided in implementations of the disclosure.

FIG. 5 is a schematic structural diagram of a tag device provided in implementations of the disclosure.

FIG. 6A is a schematic structural diagram of a searching and positioning apparatus provided in implementations of the disclosure.

FIG. 6B illustrates a modified structure of the searching and positioning apparatus illustrated in FIG. 6A provided in implementations of the disclosure.

FIG. 7 is a schematic structural diagram of another searching and positioning apparatus provided in implementations of the disclosure.

DETAILED DESCRIPTION

In order for those skilled in the art to better understand technical solutions of the disclosure, technical solutions of implementations of the disclosure will be described clearly and completely below with reference to the accompanying drawings in the implementations of the disclosure. Apparently, implementations described herein are merely some implementations, rather than all implementations, of the disclosure. Based on the implementations of the disclosure, all other implementations obtained by those of ordinary skill in the art without creative effort shall fall within the protection scope of the disclosure.

The terms "first", "second", and the like used in the specification, the claims, and the accompany drawings above of the disclosure are used to distinguish different objects rather than describe a particular order. In addition, the terms "include", "comprise", and "have" as well as variations thereof are intended to cover non-exclusive inclusion. For example, a process, method, system, product, or device including a series of steps or units is not limited to the listed steps or units. Instead, it can optionally include other steps or units that are not listed, or may also include other steps or units inherent to the process, method, product, or device.

The term "implementation" referred to herein means that a particular feature, structure, or characteristic described in conjunction with the implementation may be contained in at least one implementation of the disclosure. The phrase appearing in various places in the specification does not necessarily refer to the same implementation, nor does it refer to an independent or alternative implementation that is mutually exclusive with other implementations. It is explicitly and implicitly understood by those skilled in the art that an implementation described herein may be combined with other implementations.

Implementations of the disclosure will be described in detail below.

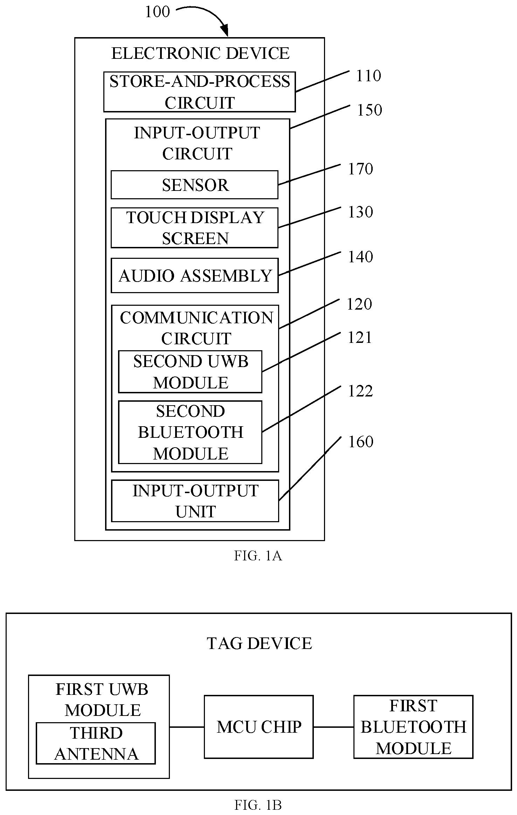

Referring to FIG. 1A, FIG. 1A is a schematic structural diagram of an electronic device provided in implementations of the disclosure. The electronic device 100 includes a store-and-process circuit 110, and a sensor 170 coupled with the store-and-process circuit 110.

The electronic device 100 may include a control circuit. The control circuit may include the store-and-process circuit 110. The store-and-process circuit 110 may include a memory, such as a hard drive memory, a non-transitory memory (such as a flash memory, other electronically programmable read-only memories used to form a solid-state drive, etc.), a transitory memory (such as a static random access memory, a dynamic random access memory, etc.), etc., and implementations of the disclosure are not limited in this regard. The store-and-process circuit 110 has a processing circuit used to control operations of the electronic device 100. The processing circuit can be implemented based on one or more microprocessors, microcontrollers, digital signal processors, baseband processors, power management units, audio codec chips, application-specific integrated circuits, display driver integrated circuits, etc.

The store-and-process circuit 110 can be configured to run software of the electronic device 100, for example, an internet browsing application, a voice over internet protocol (VOIP) phone call application, an email application, a media playback application, an operating system function, etc. The software may be used to perform some control operations, such as camera-based image collection, ambient light sensor-based ambient light measurements, proximity sensor-based proximity state measurements, information display function based on status indicators such as status indicator lamps of light-emitting diodes (LEDs), touch sensor-based touch event detection, functions associated with displaying information on multiple (e.g., layered) display screens, operations associated with implementing wireless communication functions, operations associated with collecting and generating audio signals, control operations associated with collecting and processing button-press event data, and other functions of the electronic device 100, and implementations of the disclosure are not limited in this regard.

The electronic device 100 may include an input-output circuit 150. The input-output circuit 150 can be configured to realize data input and data output of the electronic device 100, that is, to allow the electronic device 100 to receive data from an external device and also allow the electronic device 100 to output data to an external device. The input-output circuit 150 can further include the sensor 170. The sensor 170 may include an ultrasonic fingerprint recognition module, and may also include an ambient light sensor, an optical or capacitive proximity sensor, a touch sensor (e.g., based on an optical touch sensor and/or a capacitive touch sensor, where the touch sensor may be a part of a touch display screen or may be used independently as a touch sensor structure), an acceleration sensor, and other sensors. The ultrasonic fingerprint recognition module may be integrated under a screen, or may be disposed on a side surface or a back surface of the electronic device, which is not limited herein. The ultrasonic fingerprint recognition module can be configured to capture fingerprint images.

The sensor 170 may include a first camera and a second camera. The first camera may be a front camera or a rear camera, and the second camera may be a front camera or a rear camera. The second camera may be an infrared radiation (IR) camera or a visible-light camera. When the IR camera is shooting, a pupil reflects an infrared light, and therefore, the IR camera is more accurate than an RGB camera in pupil image shooting. The visible-light camera requires further pupil detections, and has higher computational precision and accuracy as well as higher versatility than the IR camera, but is computationally expensive.

The input-output circuit 150 can further include one or more display screens, such as a display screen 130. The display screen 130 may include one or more of a liquid crystal display, an organic LED (OLED) display, an electronic ink display, a plasma display, and displays based on other display technologies. The display screen 130 may include an array of touch sensors (i.e., the display screen 130 may be a touch display screen). The touch sensor may be a capacitive touch sensor formed by an array of transparent touch sensor electrodes (e.g., indium tin oxide (ITO) electrodes), or may be a touch sensor formed based on other touch technologies, such as acoustic touch, pressure sensitive touch, resistance touch, optical touch, etc., and implementations of the disclosure are not limited in this regard.

The electronic device 100 may further include an audio assembly 140. The audio assembly 140 is configured to provide the electronic device 100 with audio input and output functions. The audio assembly 140 of the electronic device 100 may include speakers, microphones, buzzers, tone generators, and other assemblies for generating and detecting sound.

A communication circuit 120 is configured to provide the electronic device 100 with the ability to communicate with external devices. The communication circuit 120 may include an analog/digital input-output interface circuit and a wireless communication circuit based on radio frequency signals and/or optical signals. The wireless communication circuit of the communication circuit 120 may include a radio frequency transceiver circuit, a power amplifier circuit, a low-noise amplifier, a switch, a filter, and an antenna. For example, the wireless communication circuit of the communication circuit 120 includes a circuit for supporting near field communication (NFC) by transmitting and receiving near-field coupled electromagnetic signals. Exemplarily, the communication circuit 120 includes an NFC antenna and an NFC transceiver. The communication circuit 120 may further include transceivers and antennas for a cellular telephone, transceiver circuits and antennas for a wireless local area network, etc.

The communication circuit 120 may further include a second ultra wide band (UWB) module 121. The second UWB module 121 can realize ranging or positioning based on UWB technology. UWB technology is a radio carrier communication technology, which uses a nanosecond-level non-sinusoidal narrow pulse rather than a sinusoidal carrier to transmit data and thus spans a wide spectrum range. UWB technology has advantages of low system complexity, low power spectral density of transmit signals, insensitivity to channel fading, low interception capability, and high positioning precision, etc. The second UWB module 121 may include a first antenna and a second antenna. The first antenna may be disposed at one side of the top of the electronic device and the second antenna may be disposed at the other side of the top of the electronic device. A first spacing distance between the first antenna and the second antenna is greater than the half wavelength of a UWB signal, which can ensure positioning precision.

The communication circuit 120 may further include a second Bluetooth module 122. The second Bluetooth module 122 is configured for Bluetooth communication.

The electronic device 100 may further include a battery, a power management circuit, and other input-output units 160. The other input-output units 160 include but are not limited to buttons, joysticks, click wheels, scroll wheels, touch pads, keypads, keyboards, cameras, LEDs, and other status indicators, etc.

An instruction can be input by a user via the input-output circuit 150 to control operations of the electronic device 100, and state information and other outputs can be received from the electronic device 100 with the input-output circuit 150 outputting data.

The electronic device in implementations of the disclosure may include various devices that have wireless communication functions, such as handheld devices, in-vehicle devices, computing devices, or other processing devices connected to the wireless modem, as well as various forms of user equipments (UE), mobile stations (MS), terminal devices, etc.

Referring to FIG. 1B, FIG. 1B is a schematic structural diagram of a tag device provided in implementations of the disclosure. The tag device includes a microcontroller unit (MCU) chip and a first UWB module. The tag device may further include a first Bluetooth module. Optionally, the first UWB module may include a third antenna.

The tag device in implementations of the disclosure may include various devices that have wireless communication functions, such as handheld devices, computing devices, wearable devices, or other processing devices connected to the wireless modem, as well as various forms of UEs, MSs, terminal devices, etc. In implementations of the disclosure, the tag device may specifically include devices in the form of the following products: remote controls, keys, smart bracelets, smart watches, wireless earphones, or smart glasses, etc., which is not limited herein.

Specifically, the electronic device and the tag device may be devices of the same type, or may be devices of different types. The electronic device and the tag device may communicate with each other based on UWB technology, or based on Bluetooth technology. In practice, the tag device usually has a small size and a relatively small battery capacity, and therefore, power consumption needs to be reduced as much as possible.

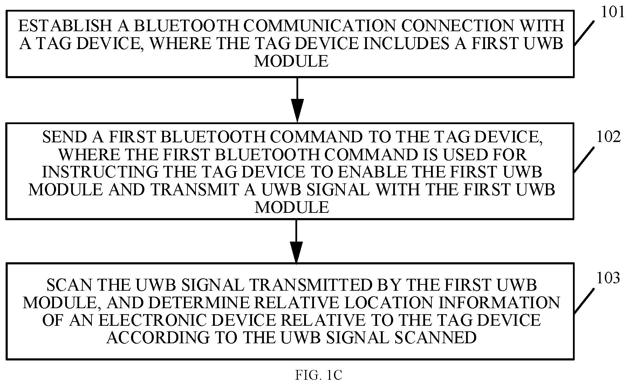

Referring to FIG. 1C, FIG. 1C is a schematic flowchart of a searching and positioning method provided in implementations of the disclosure. The method is applicable to the electronic device illustrated in FIG. 1A. As illustrated in FIG. 1C, the method provided in the disclosure includes the following.

101, establish a Bluetooth communication connection with a tag device. The tag device includes a first UWB module.

Optionally, the electronic device may include a second Bluetooth module, and the tag device may further include a first Bluetooth module. The Bluetooth communication connection can be established with the first Bluetooth module of the tag device via the second Bluetooth module. Specifically, the first Bluetooth module of the tag device may be set to be always on and be in a standby state. When search for the tag device is needed, the second Bluetooth module can be enabled by the electronic device, and the second Bluetooth module establishes the Bluetooth communication connection with the first Bluetooth module of the tag device.

Positioning based on UWB technology is much higher in power consumption than use of a Bluetooth function. Therefore, the tag device in the solution further includes the first UWB module, but the first UWB module is not always on, while the first Bluetooth module is kept to be always on, thereby reducing power consumption of the tag device.

102, send a first Bluetooth command or instruction to the tag device. The first Bluetooth command is used for instructing the tag device to enable the first UWB module and transmit a UWB signal with the first UWB module.

Optionally, in implementations of the disclosure, the electronic device can send the first Bluetooth command to the first Bluetooth module via the second Bluetooth module, such that the tag device can enable the first UWB module once the first Bluetooth command is received by the tag device via the first Bluetooth module. Specifically, the tag device may further include an MCU chip. The first Bluetooth module can wake up the MCU chip, and the first UWB module is enabled by the MCU chip. As such, the tag device can control a turn-on time of the first UWB module according to the first Bluetooth command, and the tag device will not enable the first UWB module if no first Bluetooth command is received, which is possible to reduce power consumption of the tag device, thereby saving a power of the tag device.

The first UWB module may include at least one third antenna, and a UWB signal(s) is transmitted by the at least one third antenna. Optionally, in order to reduce the size of the tag device, the tag device can be provided with only one third antenna, and a UWB signal is transmitted by the third antenna at a preset transmission period. As such, it is possible to further reduce power consumption of the tag device.

103, scan the UWB signal transmitted by the first UWB module, and determine relative location information of the electronic device relative to the tag device according to the UWB signal scanned.

Optionally, in implementations of the disclosure, the UWB signal transmitted by the first UWB module can be scanned with the second UWB module, and the relative location information can be determined according to the UWB signal scanned. As such, the UWB signal transmitted by the first UWB module is scanned by the first UWB module, and the tag device is responsible only for UWB-signal transmission without performing positioning and calculation, thereby reducing power consumption of the tag device.

The relative location information may include a relative angle of the electronic device relative to the tag device and a relative distance between the electronic device and the tag device.

Specifically, the tag device may take the form of any one of the following products: remote controls, keys, smart bracelets, smart watches, wireless earphones, or smart glasses, etc. As such, with aid of the electronic device, the tag device of any one of the above types can be found by a user quickly and accurately.

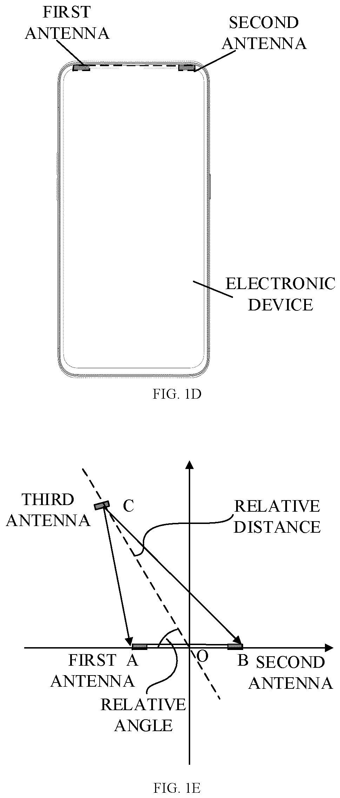

Optionally, referring to FIG. 1D, FIG. 1D is a schematic diagram illustrating arrangement of a first antenna and a second antenna in an electronic device provided in implementations of the disclosure. The second UWB module may include a first antenna and a second antenna, where the first antenna and the second antenna are in the same plane, and the plane can be parallel to a top frame of the electronic device. The first antenna may be disposed at one side of the top of the electronic device, and the second antenna may be disposed at the other side of the top of the electronic device. A first spacing distance between the first antenna and the second antenna is greater than the half wavelength of the UWB signal, which can ensure positioning precision. The UWB signal can be received by each of the first antenna and the second antenna, and as such, the relative location information can be determined according to a UWB signal received by the first antenna and a UWB signal received by the second antenna.

Specifically, the electronic device can determine the relative location information of the electronic device relative to the tag device according to the UWB signal scanned. Optionally, FIG. 1E is a schematic diagram illustrating determination of relative location information of an electronic device relative to a tag device according to a scanned UWB signal provided in implementations of the disclosure. As illustrated in FIG. 1E, a distance between the first antenna and the third antenna can be determined according to the UWB signal received by the first antenna, and a distance between the second antenna and the third antenna can be determined according to the UWB signal received by the second antenna. As such, the relative angle of the electronic device relative to the tag device as well as the relative distance between the electronic device and the tag device can be determined according to the distance between the first antenna and the third antenna, the distance between the second antenna and the third antenna, and the first spacing distance between the first antenna and the second antenna. As illustrated in FIG. 1E, a coordinate system can be established based on a plane on which the first antenna, the second antenna, and the third antenna are located. Origin O in the coordinate system is a middle point of a line between the first antenna and the second antenna. In the coordinate system, the distance between the first antenna and the third antenna, the distance between the second antenna and the third antenna, and the first spacing distance between the first antenna and the second antenna are represented by the three sides of triangle *ABC,* where point A corresponds to coordinates of the first antenna, point *B* corresponds to coordinates of the second antenna, and point C corresponds to coordinates of the third antenna. Thus, according to the distance between the first antenna and the third antenna, the distance between the second antenna and the third antenna, and the first spacing distance between the first antenna and the second antenna, a distance between the third antenna (point *A*) and origin O as well as an included angle between *AO* and *AB* can be calculated. The distance between the third antenna (point A) and origin O is taken as the relative distance between the electronic device and the tag device, and the included angle between *AO* and *AB* is taken as the relative angle of the electronic device relative to the tag device.

Optionally, the electronic device includes the second UWB module, and the second UWB module includes the first antenna and the second antenna. In step 103, the UWB signal transmitted by the first UWB module may be scanned as follows.

31, receive the UWB signal with each of the first antenna and the second antenna.

The location information of the tag device is determined according to the UWB signal scanned as follows.

32, determine a first tangential angle of the first antenna relative to the tag device according to the UWB signal received by the first antenna and the UWB signal received by the second antenna.

33, determine a first distance between the electronic device and the tag device according to the first tangential angle and a distance for the UWB signal to reach (i.e. arrive at) the first antenna.

34, take the first distance and the first tangential angle as the relative location information.

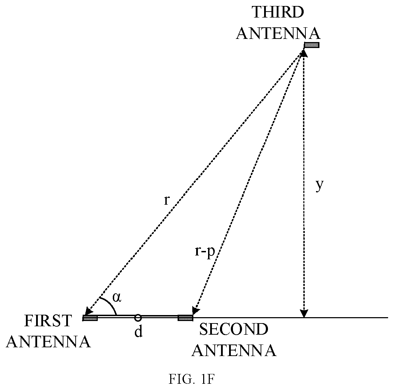

Referring to FIG. 1F, FIG. 1F is another schematic diagram illustrating determination of relative location information of an electronic device relative to a tag device according to a scanned UWB signal provided in implementations of the disclosure. When the electronic device is far from the tag device, a distance between the electronic device and the tag device is much longer than the first spacing distance between the first antenna and the second antenna. In this case, a first target distance between the electronic device and the tag device, a first distance between the first antenna and the tag device, and a second distance between the second antenna and the tag device have relatively small differences. Thus, the first tangential angle of the first antenna relative to the tag device can be determined, and the first distance between the electronic device and the tag device can be determined according to the first tangential angle and the distance for the UWB signal to reach the first antenna.

The first tangential angle is taken as the relative angle of the electronic device relative to the tag device, and the first distance is taken as the relative distance between the electronic device and the tag device. The first distance and the first tangential angle are taken as the relative location information.

Optionally, in implementations of the disclosure, the first tangential angle (i.e., first angle) of the first antenna relative to the tag device and a second tangential angle (i.e., second angle) of the second antenna relative to the tag device can be firstly determined. The first distance between the first antenna and the tag device is determined according to the first tangential angle and the distance for by the UWB signal to reach the first antenna, and the second distance between the second antenna and the tag device is determined according to the second tangential angle and a distance for the UWB signal to reach the second antenna. Then, the first tangential angle and the second tangential angle are averaged to obtain the relative angle of the electronic device relative to the tag device, and the first distance and the second distance are averaged to obtain the relative distance between the electronic device and the tag device. As such, it is possible to improve precision in determining the relative location information.

Optionally, in step 32, the first tangential angle of the first antenna relative to the tag device is determined according to the UWB signal received by the first antenna and the UWB signal received by the second antenna as follows.

3201, determine, according to the UWB signal received by the first antenna and the UWB signal received by the second antenna, a first distance-difference between the distance for the UWB signal to reach the first antenna and the distance for the UWB signal to reach the second antenna.

3202, determine the first tangential angle of the first antenna relative to the tag device according to the first distance-difference and the first spacing distance between the first antenna and the second antenna.

The first tangential angle of the first antenna relative to the tag device is determined according to the first distance-difference and the first spacing distance between the first antenna and the second antenna. Specifically, distance y from the tag device to a line between the first antenna and the second antenna of the electronic device can be determined according to the following formula:

$$y = \sqrt{\frac{\left(1 - \left(\frac{p}{d}\right)^2\right)\ (4r^2 - 4rp + p^2)}{2}}$$

As illustrated in FIG. 1F, *d* is the first spacing distance between the first antenna and the second antenna, *r* is the first distance between the first antenna and the tag device, and $p$ is the first distance-difference between the distance for the UWB signal to reach the first antenna and the distance for the UWB signal to reach the second antenna.

In addition, the first tangential angle can determined according to distances $y$ and $r$ ($r$ is the first distance between the first antenna and the tag device). As illustrated in FIG. 1F, a right-angled triangle can be constructed according to distances $y$ and $r$, where $x$ is one leg of the right-angled triangle, $y$ is the other leg of the right-angled triangle, the hypotenuse of the right-angled triangle is the first distance $r$ between the first antenna and the tag device, and the sine of the first tangential angle $a$ is $y/r$.

Optionally, in implementations of the disclosure, the method may further include the following after step 103.

A1, determine an offset angle of the electronic device relative to the tag device according to the relative location information.

A2, display the offset angle and the first distance onto a display screen.

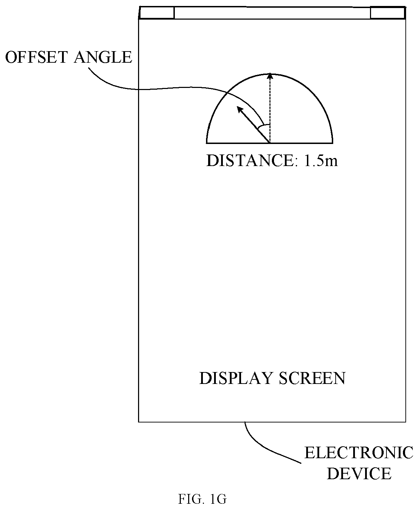

In implementations of the disclosure, for more visual indication, when search for the tag device is performed by the user with aid of the electronic device, the offset angle of the electronic device relative to the tag device can be determined according to the relative location information. For example, as illustrated in FIG. 1E, if the relative angle of the electronic device relative to the tag device is 65°, it can be determined that the offset angle of the electronic device relative to the tag device is 25°, indicating to the user that a direction of shifting the electronic device to the left by 25° is a location of the tag device. Referring to FIG. 1G, FIG. 1G is a schematic diagram illustrating display of an offset angle and a first distance onto a display screen provided in implementations of the disclosure. By displaying the offset angle and the first distance onto the display screen, it is possible to instruct the user to shift to the left or to the right according to the offset angle so as to find a direction of the tag device, and instruct the user to move according to the first distance which may be, for example, 1.5 meters (m), such that the tag device can be found by the user quickly.

Optionally, in implementations of the disclosure, after the tag device is found, the method may further include the following. After the offset angle and the first distance are displayed onto the display screen, the Bluetooth communication connection will be disconnected, and the tag device will be instructed to disable the first UWB module.

The electronic device can disable a function of: searching for the tag device according to the UWB signal scanned. Specifically, the Bluetooth communication connection can be disconnected. As such, after the Bluetooth communication connection is disconnected, the tag device can disable the first UWB module and also disable the MCU chip, thereby reducing power consumption of the tag device and saving a power of the tag device.

Optionally, in implementations of the disclosure, if the tag device is wireless earphones, the method may further include the following after the offset angle and the first distance are displayed onto the display screen.

B 1, switch an audio output pathway of the electronic device to the wireless earphones.

B2, if the electronic device is playing a target audio, adjust a volume of the wireless earphones according to the first distance.

In implementations of the disclosure, after the offset angle and the first distance are displayed onto the display screen, search for the wireless earphones can be performed by the user according to the offset angle and the first distance. If the electronic device is playing the target audio, the volume of the wireless earphones can be adjusted according to the first distance. Specifically, when the first distance is long, the volume of the wireless earphones will be high, such that the volume of the wireless earphones is high enough to be heard by the user and thus helps the user to search for the wireless earphones.

As can be seen, the method in implementations of the disclosure is applicable to the electronic device. The electronic device establishes the Bluetooth communication connection with the tag device, where the tag device includes the first UWB module. The electronic device sends the first Bluetooth command to the tag device, where the first Bluetooth command instructs the tag device to enable the first UWB module and transmit a UWB signal with the first UWB module. The electronic device scans the UWB signal transmitted by the first UWB module, and determines the relative location information of the electronic device relative to the tag device according to the UWB signal scanned. As such, the tag device can control a turn-on time of the first UWB module according to the first Bluetooth command, and the tag device will not enable the first UWB module if no first Bluetooth command is received. The electronic device scans the UWB signal transmitted by the tag device, and the tag device is responsible only for UWB-signal transmission without performing positioning and calculation, thereby reducing power consumption of the tag device. In addition, through precise positioning with UWB technology, the tag device can be found by the user quickly and accurately.

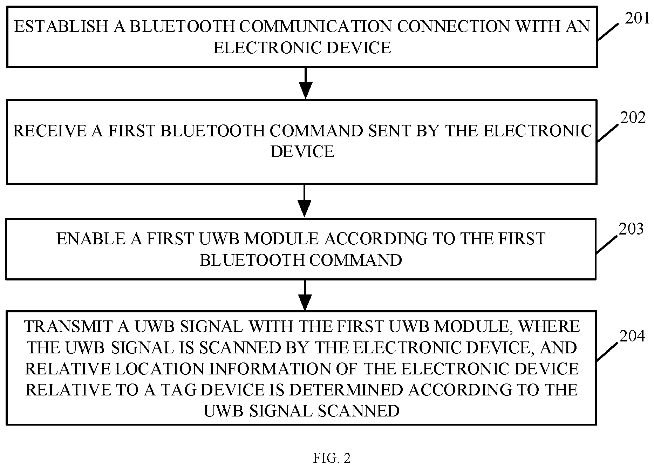

Referring to FIG. 2, FIG. 2 is a schematic flowchart of another searching and positioning method provided in implementations of the disclosure. The method is applicable to the tag device illustrated in FIG. 1B. The tag device includes a first UWB module. The method includes the following.

201, establish a Bluetooth communication connection with an electronic device.

Optionally, the tag device may further include a first Bluetooth module, and the electronic device may include a second Bluetooth module. The tag device can set the first Bluetooth module to be always on and be in a standby state. After the electronic device initiates a Bluetooth connection request with the tag device, the Bluetooth communication connection with the second Bluetooth module of the electronic device can be established by the first Bluetooth module.

202, receive a first Bluetooth command sent by the electronic device.

The first Bluetooth command instructs the tag device to enable the first UWB module.

203, enable the first UWB module according to the first Bluetooth command.

The tag device may further include an MCU chip. The first Bluetooth module can wake up the MCU chip according to the first Bluetooth command, and the first UWB module is enabled by the MCU chip. The tag device will not enable the first UWB module if no first Bluetooth command is received, thereby reducing power consumption of the tag device and saving a power of the tag device.

204, transmit a UWB signal with the first UWB module. The UWB signal is scanned by the electronic device, and relative location information of the electronic device relative to the tag device is determined according to the UWB signal scanned.

The first UWB module may include at least one third antenna, and a UWB signal is transmitted by the at least one third antenna. Optionally, in order to reduce the size of the tag device, the tag device can be provided with only one third antenna, and a UWB signal is transmitted by the third antenna at a preset transmission period. As such, it is possible to further reduce power consumption of the tag device.

In addition, the relative location information of the electronic device relative to the tag device is determined by the electronic device according to the UWB signal scanned, which is conducive to finding the tag device quickly and accurately through precise positioning with UWB technology. The electronic device scans the UWB signal transmitted by the tag device, and the tag device is responsible only for UWB-signal transmission without performing positioning and calculation, thereby reducing power consumption of the tag device.

Optionally, in implementations of the disclosure, the method may further include the following. After the Bluetooth communication connection is disconnected, the first UWB module and the MCU will be disabled.

Specifically, after the tag device is found by a user with aid of the electronic device, the electronic device can disconnect the Bluetooth communication connection. In this way, after the Bluetooth communication connection is disconnected, the tag device can disable the first UWB module and the MCU chip, thereby reducing power consumption of the tag device and thus saving a power of the tag device.

As can be seen, the method in implementations of the disclosure is applicable to the tag device. The tag device includes the first UWB module. The tag device establishes the Bluetooth communication connection with the electronic device. The tag device receives the first Bluetooth command sent by the electronic device. The tag device enables the first UWB module according to the first Bluetooth command. The tag device transmit a UWB signal with the first UWB module, where the UWB signal is scanned by a second UWB module of the electronic device, and the relative location information of the electronic device relative to the tag device is determined according to the UWB signal scanned. As such, the tag device can control a turn-on time of the first UWB module according to the first Bluetooth command, and the tag device will not enable the first UWB module if no first Bluetooth command is received. The electronic device scans the UWB signal transmitted by the tag device, and the tag device is responsible only for UWB-signal transmission without performing positioning and calculation, thereby reducing power consumption of the tag device. In addition, through precise positioning with UWB technology, the tag device can be found by the user quickly and accurately.

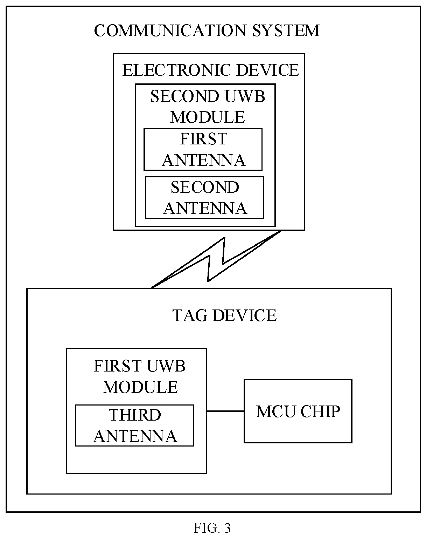

Referring to FIG. 3, FIG. 3 is a schematic architectural diagram of a searching and positioning system provided in implementations of the disclosure. The system includes the electronic device illustrated in FIG. 1A and the tag device illustrated in FIG. 1B. The tag device includes a first UWB module, and the electronic device includes a second UWB module. The second UWB module includes a first antenna and a second antenna, and the first UWB module includes a third antenna.

The electronic device is configured to establish a Bluetooth communication connection with the tag device and send a first Bluetooth command to the tag device. The tag device is configured to enable the first UWB module according to the first Bluetooth command and transmit a UWB signal with the first UWB module. The electronic device is further configured to scan the UWB signal transmitted by the first UWB module, and determine relative location information of the electronic device relative to the tag device according to the UWB signal scanned.

As can be seen, the electronic device establishes the Bluetooth communication connection with the tag device and sends the first Bluetooth command to the tag device. The tag device enables the first UWB module according to the first Bluetooth command and transmits a UWB signal with the first UWB module. The electronic device scans the UWB signal transmitted by the first UWB module, and determines the relative location information of the electronic device relative to the tag device according to the UWB signal scanned. As such, the tag device can control a turn-on time of the first UWB module according to the first Bluetooth command, and the tag device will not enable the first UWB module if no first Bluetooth command is received. The electronic device scans the UWB signal transmitted by the tag device, and the tag device is responsible only for UWB-signal transmission without performing positioning and calculation, thereby reducing power consumption of the tag device. In addition, through precise positioning with UWB technology, the tag device can be found by a user quickly and accurately.

Optionally, the tag device further includes an MCU chip. In terms of enabling the first UWB module according to the first Bluetooth command, the tag device is specifically configured to wake up the MCU chip according to the first Bluetooth command, and enable the first UWB module with the MCU chip. The electronic device is further configured to disconnect the Bluetooth communication connection after the relative location information of the electronic device relative to the tag device is determined by the electronic device according to the UWB signal scanned. The tag device is further configured to disable the first UWB module and the MCU after the Bluetooth communication connection is disconnected.

Optionally, the tag device is further configured to send to the electronic device a Bluetooth connection request used for requesting to establish a Bluetooth communication connection with the tag device, and send a second Bluetooth command to the electronic device after the Bluetooth communication connection is established with the tag device. The electronic device is further configured to indicate a preset reminding operation according to the second Bluetooth command, where the preset reminding operation is used for reminding existence of the electronic device. The tag device is further configured to send a third Bluetooth command to the electronic device. The electronic device is further configured to determine a current target application interface of the electronic device, and execute, according to the third Bluetooth command, a preset control operation corresponding to the target application interface.

The preset reminding operation may include at least one of: ringing, vibration, lighting of an indicator lamp(s), etc., which is not limited herein. The preset reminding operation is used for reminding the user of a location of the electronic device, thus helping the user to find the electronic device with aid of the tag device.

The target application interface may include at least one of: a shooting interface, an audio playback interface, a call interface, etc., which is not limited herein. For different target application interfaces, corresponding preset control operations can be set. For example, for the shooting interface, the preset control operation may be a shooting operation. For the audio playback interface, the preset control operation may be a song-switching operation. For the call interface, the preset control operation may be a call-answering operation, etc., which is not limited herein. In this way, the electronic device can be controlled by the tag device through Bluetooth communication.

The following will elaborate apparatuses for performing the searching and positioning method described above, which are specifically as follows.

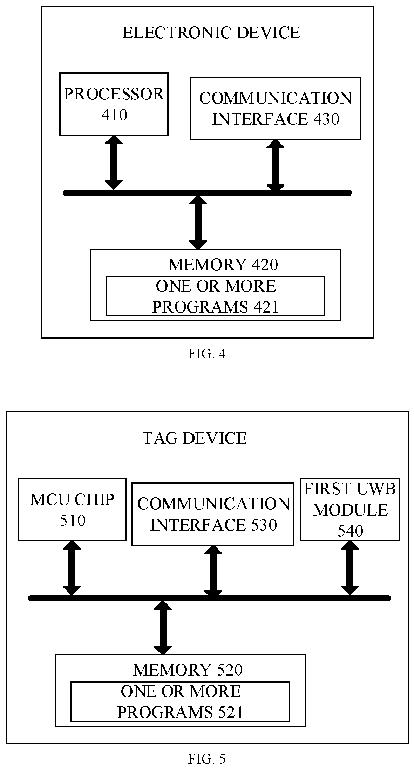

Consistent with the above, referring to FIG. 4, FIG. 4 is a schematic structural diagram of an electronic device provided in implementations of the disclosure.

The electronic device includes a processor 410, a communication interface 430, a memory 420, and one or more programs 421. The one or more programs 421 are stored in the memory 420 and configured to be executed by the processor. The programs 421 include instructions for performing the following operations. Establish a Bluetooth communication connection with a tag device, where the tag device includes a first UWB module. Send a first Bluetooth command to the tag device, where the first Bluetooth command instructs the tag device to enable the first UWB module and transmit a UWB signal with the first UWB module. Scan the UWB signal transmitted by the first UWB module, and determine relative location information of the electronic device relative to the tag device according to the UWB signal scanned.

In a possible example, the electronic device further includes a second UWB module, where the second UWB module includes a first antenna and a second antenna. In terms of scanning the UWB signal transmitted by the first UWB module, the programs 421 further include instructions to: receive the UWB signal with each of the first antenna and the second antenna. In terms of determining the location information of the tag device according to the UWB signal scanned, the programs 421 further include instructions for performing the following operations. Determine a first tangential angle of the first antenna relative to the tag device according to a UWB signal received by the first antenna and a UWB signal received by the second antenna. Determine a first distance between the electronic device and the tag device according to the first tangential angle and a distance for the UWB signal to reach the first antenna. Take the first distance and the first tangential angle as the relative location information.

In a possible example, in terms of determining the first tangential angle of the first antenna relative to the tag device according to the UWB signal received by the first antenna and the UWB signal received by the second antenna, the programs 421 include instructions for performing the following operations. Determine, according to the UWB signal received by the first antenna and the UWB signal received by the second antenna, a first distance-difference between the distance for the UWB signal to reach the first antenna and a distance for the UWB signal to reach the second antenna. Determine the first tangential angle of the first antenna relative to the tag device according to the first distance-difference and a first spacing distance between the first antenna and the second antenna.

In a possible example, the programs 421 further include instructions for performing the following operations. Determine an offset angle of the electronic device relative to the tag device according to the relative location information. Display the offset angle and the first distance onto a display screen.

In a possible example, the programs 421 further include instructions to: disconnect the Bluetooth communication connection and instruct the tag device to disable the first UWB module, after the offset angle and the first distance are displayed onto the display screen.

Consistent with the above, referring to FIG. 5, FIG. 5 is a schematic structural diagram of a tag device provided in implementations of the disclosure. The tag device includes a first UWB module 540, an MCU chip 510, a communication interface 530, a memory 520, and one or more programs 521. The one or more programs 521 are stored in the memory 520 and configured to be executed by the processor. The programs 521 include instructions for performing the following operations. Establish a Bluetooth communication connection with an electronic device. Receive a first Bluetooth command sent by the electronic device. Enable the first UWB module according to the first Bluetooth command. Transmit a UWB signal with the first UWB module, where the UWB signal is scanned by the electronic device, and relative location information of the electronic device relative to the tag device is determined according to the UWB signal scanned.

In a possible example, the tag device further includes the MCU chip. In terms of enabling the first UWB module according to the first Bluetooth command, the programs 421 include instructions to: wake up the MCU chip according to the first Bluetooth command, and enable the first UWB module with the MCU chip. The programs 421 further include instructions to: disable the first UWB module and the MCU after the Bluetooth communication connection is disconnected.

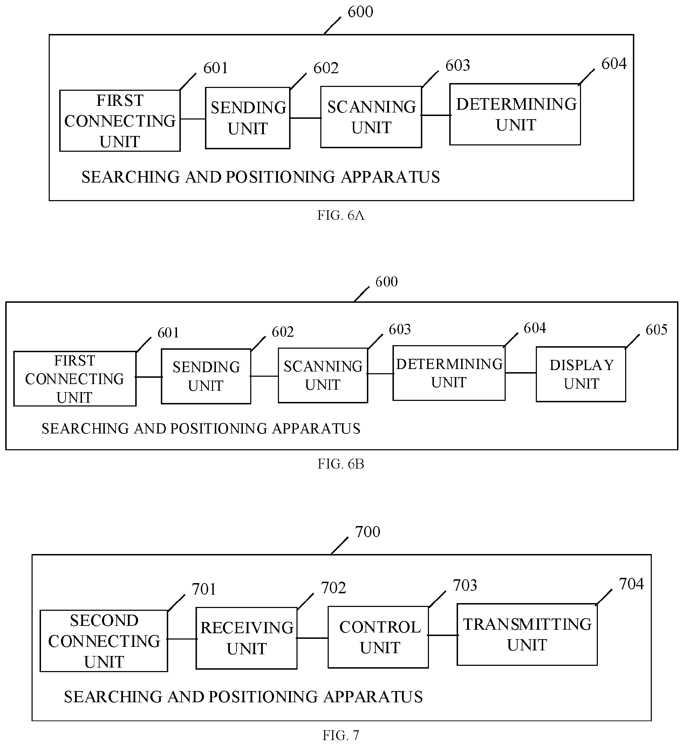

Referring to FIG. 6A, FIG. 6A is a schematic structural diagram of a searching and positioning apparatus provided in implementations of the disclosure. The apparatus 600 includes a first connecting unit 601, a sending unit 602, a scanning unit 603, and a determining unit 604. The first connecting unit 601 is configured to establish a Bluetooth communication connection with a tag device, where the tag device includes a first UWB module. The sending unit 602 is configured to send a first Bluetooth command to the tag device, where the first Bluetooth command instructs the tag device to enable the first UWB module and transmit a UWB signal with the first UWB module. The scanning unit 603 is configured to scan the UWB signal transmitted by the first UWB module. The determining unit 604 is configured to determine relative location information of an electronic device relative to the tag device according to the UWB signal scanned.

Optionally, the electronic device further includes a second UWB module, where the second UWB module includes a first antenna and a second antenna. In terms of scanning the UWB signal transmitted by the first UWB module, the scanning unit 603 is specifically configured to receive the UWB signal with each of the first antenna and the second antenna. In terms of determining the location information of the tag device according to the UWB signal scanned, the determining unit 604 is specifically configured to: determine a first tangential angle of the first antenna relative to the tag device according to a UWB signal received by the first antenna and a UWB signal received by the second antenna, determine a first distance between the electronic device and the tag device according to the first tangential angle and a distance for the UWB signal to reach the first antenna, and take the first distance and the first tangential angle as the relative location information.

Optionally, in terms of determining the first tangential angle of the first antenna relative to the tag device according to the UWB signal received by the first antenna and the UWB signal received by the second antenna, the determining unit 604 is specifically configured to: determine, according to the UWB signal received by the first antenna and the UWB signal received by the second antenna, a first distance-difference between the distance for the UWB signal to reach the first antenna and a distance for the UWB signal to reach the second antenna; and determine the first tangential angle of the first antenna relative to the tag device according to the first distance-difference and a first spacing distance between the first antenna and the second antenna.

Optionally, referring to FIG. 6B, FIG. 6B illustrates a modified structure of the searching and positioning apparatus illustrated in FIG. 6A. Compared with FIG. 6A, the apparatus can further include a display unit 605. The determining unit 604 is further configured to determine an offset angle of the electronic device relative to the tag device according to the relative location information. The display unit 605 is configured to display the offset angle and the first distance onto a display screen.

Optionally, the first connecting unit 601 is further configured to disconnect the Bluetooth communication connection and instruct the tag device to disable the first UWB module, after the offset angle and the first distance are displayed onto the display screen.

As can be seen, the apparatus in implementations of the disclosure is applicable to the electronic device. The electronic device establishes the Bluetooth communication connection with the tag device, where the tag device includes the first UWB module. The electronic device sends the first Bluetooth command to the tag device, where the first Bluetooth command instructs the tag device to enable the first UWB module and transmit a UWB signal with the first UWB module. The electronic device scans the UWB signal transmitted by the first UWB module, and determines the relative location information of the electronic device relative to the tag device according to the UWB signal scanned. As such, the tag device can control a turn-on time of the first UWB module according to the first Bluetooth command, and the tag device will not enable the first UWB module if no first Bluetooth command is received. The electronic device scans the UWB signal transmitted by the tag device, and the tag device is responsible only for UWB-signal transmission without performing positioning and calculation, thereby reducing power consumption of the tag device. In addition, through precise positioning with UWB technology, the tag device can be found by a user quickly and accurately.

Referring to FIG. 7, FIG. 7 is a schematic structural diagram of another searching and positioning apparatus provided in implementations of the disclosure. The apparatus 700 is applicable to the tag device illustrated in FIG. 1B. The tag device includes a first UWB module. The apparatus 700 includes a second connecting unit 701, a receiving unit 702, a control unit 703, and a transmitting unit 704. The second connecting unit is configured to establish a Bluetooth wireless connection with an electronic device. The receiving unit is configured to receive a first Bluetooth command sent by the electronic device. The control unit is configured to enable the first UWB module according to the first Bluetooth command. The transmitting unit is configured to transmit a UWB signal with the first UWB module, where the UWB signal is scanned by the electronic device, and relative location information of the electronic device relative to the tag device is determined according to the UWB signal scanned.

Optionally, the tag device further includes an MCU chip. In terms of enabling the first UWB module according to the first Bluetooth command, the control unit 703 is specifically configured to wake up the MCU chip according to the first Bluetooth command, and enable the first UWB module with the MCU chip. The control unit 703 is further configured to disable the first UWB module and the MCU after the Bluetooth communication connection is disconnected.

As can be seen, the tag device establishes the Bluetooth communication connection with the electronic device. The tag device receives the first Bluetooth command sent by the electronic device. The tag device enables the first UWB module according to the first Bluetooth command. The tag device transmit a UWB signal with the first UWB module, where the UWB signal is scanned by a second UWB module of the electronic device, and the relative location information of the electronic device relative to the tag device is determined according to the UWB signal scanned. As such, the tag device can control a turn-on time of the first UWB module according to the first Bluetooth command, and the tag device will not enable the first UWB module if no first Bluetooth command is received. The electronic device scans the UWB signal transmitted by the tag device, and the tag device is responsible only for UWB-signal transmission without performing positioning and calculation, thereby reducing power consumption of the tag device. In addition, through precise positioning with UWB technology, the tag device can be found by a user quickly and accurately.

It can be understood that, functions of various program modules of the searching and positioning apparatus in the implementations can be implemented according to the methods in the foregoing method implementations. For the specific implementing process, reference can be made to related elaborations in the foregoing method implementations, which will not be repeated herein.

Implementations of the disclosure further provide a computer storage medium. The computer storage medium is configured to store computer programs for electronic data interchange (EDI) which are operable with a computer to perform some or all operations of any one method described in the foregoing method implementations. The computer includes an electronic device and a tag device.

Implementations of the disclosure further provide a computer program product. The computer program product includes a non-transitory computer-readable storage medium that stores computer programs. The computer programs are operable with a computer to execute some or all operations of any one method described in the foregoing method implementations. The computer program product may be a software installation package. The computer includes an electronic device and a tag device.

It is to be noted that, for the sake of simplicity, the foregoing method implementations are described as a series of action combinations. However, it will be appreciated by those skilled in the art that the disclosure is not limited by the sequence of actions described. According to the disclosure, some steps or operations may be performed in other order or simultaneously. Besides, it will be appreciated by those skilled in the art that the implementations described in the specification are exemplary implementations and the actions and modules involved are not necessarily essential to the present disclosure.

In the above implementations, elaboration of each implementation has its own emphasis. For parts not described in detail in one implementation, reference can be made to related elaborations in other implementations.

It will be appreciated that the apparatuses disclosed in implementations of the disclosure may also be implemented in various other manners. For example, the above apparatus implementations are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device or unit, and may be electrical, or otherwise.

Separated units as illustrated may or may not be physically separated. Components or parts displayed as units may or may not be physical units, and may reside at one location or may be distributed to multiple networked units. Some or all of the units may be selectively adopted according to practical needs to achieve desired objectives of the technical solutions of implementations.

In addition, various functional units described in implementations of the disclosure may be integrated into one processing unit or may be present as a number of physically separated units, and two or more units may be integrated into one. The integrated unit may take the form of hardware or a software functional unit.

If the integrated units are implemented as software functional units and sold or used as standalone products, they may be stored in a computer-readable memory. Based on such an understanding, the essential technical solutions of the disclosure, or the portion that contributes to the prior art, or all or part of the technical solutions may be embodied as software products. The computer software products can be stored in a memory and may include multiple instructions that, when executed, can cause a computing device, e.g., a personal computer, a server, a network device, etc., to execute some or all operations of the foregoing methods described in various implementations of the disclosure. The memory may include various kinds of media that can store program codes, such as a universal serial bus (USB) flash disk, a read only memory (ROM), a random access memory (RAM), a mobile hard drive, a magnetic disk, or an optical disk, etc.

It will be understood by those of ordinary skill in the art that all or some operations of various methods of the foregoing implementations may be accomplished by means of a program to instruct associated hardware. The program may be stored in a computer-readable memory, which may include a flash memory, a ROM, a RAM, a magnetic disk, an optical disk, and so on.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

**Claims**

1. A searching and positioning method, applied to an electronic device and comprising:

   establishing a Bluetooth communication connection with a tag device, the tag device comprising a first ultra wide band (UWB) module;
   sending a first Bluetooth command to the tag device, the first Bluetooth command instructing the tag device to enable the first UWB module and transmit a UWB signal with the first UWB module; and
   scanning the UWB signal transmitted by the first UWB module, and determining relative location information of the electronic device relative to the tag device according to the UWB signal scanned.

2. The method of claim 1, wherein the electronic device comprises a second UWB module, and the second UWB module comprises a first antenna and a second antenna, and wherein

   scanning the UWB signal transmitted by the first UWB module comprises:
   receiving the UWB signal with each of the first antenna and the second antenna; and
   determining the location information of the tag device according to the UWB signal scanned comprises:

   determining a first tangential angle of the first antenna relative to the tag device according to a UWB signal received by the first antenna and a UWB signal received by the second antenna;
   determining a first distance between the electronic device and the tag device according to the first tangential angle and a distance for the UWB signal to reach the first antenna; and
   taking the first distance and the first tangential angle as the relative location information.

3. The method of claim 2, wherein determining the first tangential angle of the first antenna relative to the tag device according to the UWB signal received by the first antenna and the UWB signal received by the second antenna comprises:

   determining, according to the UWB signal received by the first antenna and the UWB signal received by the second antenna, a first distance-difference between the distance for the UWB signal to reach the first antenna and a distance for the UWB signal to reach the second antenna; and
   determining the first tangential angle of the first antenna relative to the tag device according to the first distance-difference and a first spacing distance between the first antenna and the second antenna.

4. The method of claim 2 or 3, further comprising:

   determining an offset angle of the electronic device relative to the tag device according to the relative location information; and
   displaying the offset angle and the first distance onto a display screen.

5. The method of claim 4, further comprising:
   disconnecting the Bluetooth communication connection and instructing the tag device to disable the first UWB module, after the offset angle and the first distance are displayed onto the display screen.

6. A searching and positioning method, applied to a tag device comprising a first ultra wide band (UWB) module, the method comprising:

establishing a Bluetooth communication connection with an electronic device;
receiving a first Bluetooth command sent by the electronic device;
enabling the first UWB module according to the first Bluetooth command; and
transmitting a UWB signal with the first UWB module, the UWB signal being scanned by the electronic device, and relative location information of the electronic device relative to the tag device being determined according to the UWB signal scanned.

7. The method of claim 6, wherein the tag device further comprises a microcontroller unit (MCU) chip, and wherein

enabling the first UWB module according to the first Bluetooth command comprises:
waking up the MCU chip according to the first Bluetooth command, and enabling the first UWB module with the MCU chip; and
the method further comprises:
disabling the first UWB module and the MCU after the Bluetooth communication connection is disconnected.

8. A searching and positioning apparatus, comprising:

a first connecting unit configured to establish a Bluetooth communication connection with a tag device, the tag device comprising a first ultra wide band (UWB) module;
a sending unit configured to send a first Bluetooth command to the tag device, the first Bluetooth command instructing the tag device to enable the first UWB module and transmit a UWB signal with the first UWB module;
a scanning unit configured to scan the UWB signal transmitted by the first UWB module; and
a determining unit configured to determine relative location information of an electronic device relative to the tag device according to the UWB signal scanned.

9. The apparatus of claim 8, wherein the electronic device comprises a second UWB module, and the second UWB module comprises a first antenna and a second antenna, and wherein

the determining unit configured to scan the UWB signal transmitted by the first UWB module is specifically configured to:
receive the UWB signal with each of the first antenna and the second antenna; and
determining the location information of the tag device according to the UWB signal scanned comprises:

determining a first tangential angle of the first antenna relative to the tag device according to a UWB signal received by the first antenna and a UWB signal received by the second antenna;
determining a first distance between the electronic device and the tag device according to the first tangential angle and a distance for the UWB signal to reach the first antenna; and
taking the first distance and the first tangential angle as the relative location information.

10. The apparatus of claim 9, wherein the determining unit configured to determine the first tangential angle of the first antenna relative to the tag device according to the UWB signal received by the first antenna and the UWB signal received by the second antenna is specifically configured to:

determine, according to the UWB signal received by the first antenna and the UWB signal received by the second antenna, a first distance-difference between the distance for the UWB signal to reach the first antenna and a distance for the UWB signal to reach the second antenna; and
determine the first tangential angle of the first antenna relative to the tag device according to the first distance-difference and a first spacing distance between the first antenna and the second antenna.

11. The apparatus of claim 9 or 10, wherein the determining unit is further configured to:

determine an offset angle of the electronic device relative to the tag device according to the relative location information; and
display the offset angle and the first distance onto a display screen.

12. The apparatus of claim 11, wherein the determining unit is further configured to:
disconnect the Bluetooth communication connection and instruct the tag device to disable the first UWB module, after the offset angle and the first distance are displayed onto the display screen.

13. A searching and positioning apparatus, applied to a tag device comprising a first ultra wide band (UWB) module, the apparatus comprising:

a second connecting unit configured to establish a Bluetooth wireless connection with an electronic device;

a receiving unit configured to receive a first Bluetooth command sent by the electronic device;

a control unit configured to enable the first UWB module according to the first Bluetooth command; and

a transmitting unit configured to transmit a UWB signal with the first UWB module, the UWB signal being scanned by the electronic device, and relative location information of the electronic device relative to the tag device being determined according to the UWB signal scanned.

14. The apparatus of claim 13, wherein the tag device further comprises a microcontroller unit (MCU) chip, and wherein

the control unit configured to enable the first UWB module according to the first Bluetooth command is specifically configured to:
wake up the MCU chip according to the first Bluetooth command, and enable the first UWB module with the MCU chip; and
the control unit is further configured to:
disable the first UWB module and the MCU after the Bluetooth communication connection is disconnected.

15. A searching and positioning system, comprising an electronic device and a tag device, the tag device comprising a first ultra wide band (UWB) module, and the electronic device comprising a second UWB module, wherein

the electronic device is configured to establish a Bluetooth communication connection with the tag device and send a first Bluetooth command to the tag device;
the tag device is configured to enable the first UWB module according to the first Bluetooth command and transmit a UWB signal with the first UWB module; and
the electronic device is further configured to scan the UWB signal transmitted by the first UWB module, and determine relative location information of the electronic device relative to the tag device according to the UWB signal scanned.

16. The system of claim 15, wherein the tag device further comprises a microcontroller unit (MCU) chip, and wherein

the tag device configured to enable the first UWB module according to the first Bluetooth command is specifically configured to:
wake up the MCU chip according to the first Bluetooth command, and enable the first UWB module with the MCU chip;
the electronic device is further configured to: disconnect the Bluetooth communication connection after the relative location information of the electronic device relative to the tag device is determined by the electronic device according to the UWB signal scanned; and
the tag device is further configured to: disable the first UWB module and the MCU after the Bluetooth communication connection is disconnected.

17. The system of claim 15 or 16, wherein

the tag device is further configured to send to the electronic device a Bluetooth connection request used for requesting to establish a Bluetooth communication connection with the tag device, and send a second Bluetooth command to the electronic device after the Bluetooth communication connection is established with the tag device;
the electronic device is further configured to indicate a preset reminding operation according to the second Bluetooth command, wherein the preset reminding operation is used for reminding existence of the electronic device;
the tag device is further configured to send a third Bluetooth command to the electronic device; and
the electronic device is further configured to determine a current target application interface of the electronic device, and execute, according to the third Bluetooth command, a preset control operation corresponding to the target application interface.

18. An electronic device, comprising a processor, a memory, a communication interface, and one or more programs stored in the memory and configured to be executed by the processor, the programs comprising instructions for performing the method of any of claims 1 to 5.

19. A tag device, comprising a first ultra wide band (UWB) module, a microcontroller unit (MCU) chip, a memory, a communication interface, and one or more programs stored in the memory and configured to be executed by the MCU chip, the programs comprising instructions for performing the method of claim 6 or 7.

20. A computer-readable storage medium configured to store computer programs for electronic data interchange (EDI) which are operable with a computer to perform the method of any of claims 1 to 7.

100

ELECTRONIC DEVICE

STORE-AND-PROCESS
CIRCUIT — 110

INPUT-OUTPUT
CIRCUIT — 150

SENSOR — 170

TOUCH DISPLAY
SCREEN — 130

AUDIO ASSEMBLY — 140

COMMUNICATION
CIRCUIT — 120

SECOND UWB
MODULE — 121

SECOND
BLUETOOTH
MODULE — 122

INPUT-OUTPUT
UNIT — 160

FIG. 1A

TAG DEVICE

FIRST UWB
MODULE

THIRD
ANTENNA

MCU CHIP

FIRST
BLUETOOTH
MODULE

FIG. 1B

ESTABLISH A BLUETOOTH COMMUNICATION CONNECTION WITH A TAG DEVICE, WHERE THE TAG DEVICE INCLUDES A FIRST UWB MODULE — 101

SEND A FIRST BLUETOOTH COMMAND TO THE TAG DEVICE, WHERE THE FIRST BLUETOOTH COMMAND IS USED FOR INSTRUCTING THE TAG DEVICE TO ENABLE THE FIRST UWB MODULE AND TRANSMIT A UWB SIGNAL WITH THE FIRST UWB MODULE — 102

SCAN THE UWB SIGNAL TRANSMITTED BY THE FIRST UWB MODULE, AND DETERMINE RELATIVE LOCATION INFORMATION OF AN ELECTRONIC DEVICE RELATIVE TO THE TAG DEVICE ACCORDING TO THE UWB SIGNAL SCANNED — 103

FIG. 1C

FIRST
ANTENNA

SECOND
ANTENNA

ELECTRONIC
DEVICE

FIG. 1D

THIRD
ANTENNA

C

RELATIVE
DISTANCE

FIRST  A
ANTENNA

O

B SECOND
ANTENNA

RELATIVE
ANGLE

FIG. 1E

THIRD
ANTENNA

y

r

r-p

α

FIRST
ANTENNA

d

SECOND
ANTENNA

FIG. 1F

OFFSET ANGLE

DISTANCE: 1.5m

DISPLAY SCREEN

ELECTRONIC
DEVICE

FIG. 1G

```
┌─────────────────────────────────────────────────────────────────┐
│  ESTABLISH A BLUETOOTH COMMUNICATION CONNECTION WITH AN           │ ⟋ 201
│  ELECTRONIC DEVICE                                                │
└─────────────────────────────────────────────────────────────────┘
                                │
                                ▼
┌─────────────────────────────────────────────────────────────────┐
│  RECEIVE A FIRST BLUETOOTH COMMAND SENT BY THE ELECTRONIC         │ ⟋ 202
│  DEVICE                                                           │
└─────────────────────────────────────────────────────────────────┘
                                │
                                ▼
┌─────────────────────────────────────────────────────────────────┐
│  ENABLE A FIRST UWB MODULE ACCORDING TO THE FIRST                 │ ⟋ 203
│  BLUETOOTH COMMAND                                                │
└─────────────────────────────────────────────────────────────────┘
                                │
                                ▼
┌─────────────────────────────────────────────────────────────────┐
│  TRANSMIT A UWB SIGNAL WITH THE FIRST UWB MODULE, WHERE           │
│  THE UWB SIGNAL IS SCANNED BY THE ELECTRONIC DEVICE, AND          │ ⟋ 204
│  RELATIVE LOCATION INFORMATION OF THE ELECTRONIC DEVICE           │
│  RELATIVE TO A TAG DEVICE IS DETERMINED ACCORDING TO THE          │
│  UWB SIGNAL SCANNED                                               │
└─────────────────────────────────────────────────────────────────┘
```

FIG. 2

COMMUNICATION SYSTEM

ELECTRONIC DEVICE

SECOND UWB MODULE

FIRST ANTENNA

SECOND ANTENNA

TAG DEVICE

FIRST UWB MODULE

THIRD ANTENNA

MCU CHIP

FIG. 3

ELECTRONIC DEVICE

PROCESSOR
410

COMMUNICATION
INTERFACE 430

MEMORY 420

ONE OR MORE
PROGRAMS 421

FIG. 4

TAG DEVICE

MCU CHIP
510

COMMUNICATION
INTERFACE 530

FIRST UWB
MODULE
540

MEMORY 520

ONE OR MORE
PROGRAMS 521

FIG. 5

EP 4 161 111 A1

600

| FIRST CONNECTING UNIT | SENDING UNIT | SCANNING UNIT | DETERMINING UNIT |

601 602 603 604

SEARCHING AND POSITIONING APPARATUS

FIG. 6A

600

| FIRST CONNECTING UNIT | SENDING UNIT | SCANNING UNIT | DETERMINING UNIT | DISPLAY UNIT |

601 602 603 604 605

SEARCHING AND POSITIONING APPARATUS

FIG. 6B

700

| SECOND CONNECTING UNIT | RECEIVING UNIT | CONTROL UNIT | TRANSMITTING UNIT |

701 702 703 704

SEARCHING AND POSITIONING APPARATUS

FIG. 7

## INTERNATIONAL SEARCH REPORT

| | International application No. |
|---|---|
| | **PCT/CN2021/106272** |

**A. CLASSIFICATION OF SUBJECT MATTER**

H04W 4/80(2018.01)i; H04W 52/02(2009.01)i

According to International Patent Classification (IPC) or to both national classification and IPC

**B. FIELDS SEARCHED**

Minimum documentation searched (classification system followed by classification symbols)

H04W; H04Q; H04B; H04L

Documentation searched other than minimum documentation to the extent that such documents are included in the fields searched

Electronic data base consulted during the international search (name of data base and, where practicable, search terms used)

CNPAT, CNKI, WPI, EPODOC: 定位, 位置, 开启, 启动, 发起, 蓝牙, uwb, bluetooth, positioning, location, initiate

**C. DOCUMENTS CONSIDERED TO BE RELEVANT**

| Category* | Citation of document, with indication, where appropriate, of the relevant passages | Relevant to claim No. |
|---|---|---|
| X | CN 110839206 A (BEIJING BOOCAX TECHNOLOGY CO., LTD. et al.) 25 February 2020 (2020-02-25) <br> description, paragraphs [0039]-[0070], and figures 1-3 | 1-20 |
| X | CN 108344988 A (LI, Yanfei) 31 July 2018 (2018-07-31) <br> description, paragraphs [0029]-[0101], and figures 1-10 | 1-20 |
| X | CN 206002688 U (LI, Yanfei) 08 March 2017 (2017-03-08) <br> description, paragraphs [0041]-[0060], and figures 1-6 | 1-20 |
| X | CN 111538543 A (BEIJING XIAOMI MOBILE SOFTWARE CO., LTD.) 14 August 2020 (2020-08-14) <br> description, paragraphs [0047]-[0096], and figures 1-6 | 1-20 |
| PX | CN 111970672 A (GUANGDONG OPPO MOBILE TELECOMMUNICATIONS CORP., LTD.) 20 November 2020 (2020-11-20) <br> description, paragraphs [0052]-[0196], and figures 1-7 | 1-20 |
| A | US 2017123039 A1 (INDUSTRIAL BANK OF KOREA) 04 May 2017 (2017-05-04) <br> entire document | 1-20 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 August 2021** | **28 September 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/106272**

| Patent document cited in search report | | | Publication date (day/month/year) | Patent family member(s) | Publication date (day/month/year) |
|---|---|---|---|---|---|
| CN | 110839206 | A | 25 February 2020 | None | |
| CN | 108344988 | A | 31 July 2018 | None | |
| CN | 206002688 | U | 08 March 2017 | None | |
| CN | 111538543 | A | 14 August 2020 | None | |
| CN | 111970672 | A | 20 November 2020 | None | |
| US | 2017123039 | A1 | 04 May 2017 | None | |

Form PCT/ISA/210 (patent family annex) (January 2015)